# EUROPÄISCHE PATENTSCHRIFT

(11) **EP 3 093 078 B1**
(45) Veröffentlichungstag und Bekanntmachung des Hinweises auf die Patenterteilung: **17.07.2024**
(21) Anmeldenummer: 16167990.7
(22) Anmeldetag: 03.05.2016
(51) Int. Cl.: B21D 43/06, B21D 43/10, B25J 15/02, B23Q 7/04, B65G 47/90

(54) **VERFAHREN UND VORRICHTUNG ZUM ABFÜHREN EINES WERKSTÜCKS MIT EINEM UNEBENEN ODER KONTURIERTEN FLÄCHENABSCHNITT AUS EINER BEARBEITUNGSMASCHINE**
METHOD AND DEVICE FOR EVACUATING A WORKPIECE COMPRISING AN UNEVEN OR CONTOURED SURFACE SECTION OUT FROM A TREATMENT MACHINE
PROCEDE ET DISPOSITIF DESTINES A EVACUER UNE PIECE PRESENTANT UNE SECTION DE SURFACE PROFILEE OU INEGALE D'UNE MACHINE D'USINAGE

(30) Priorität: 12.05.2015 DE 102015107470
(43) Veröffentlichungstag der Anmeldung: 16.11.2016
(73) Patentinhaber: TRUMPF Werkzeugmaschinen SE + Co. KG, 71254 Ditzingen (DE); TRUMPF SE + Co. KG, 71254 Ditzingen (DE)
(72) Erfinder: Heinz, Alexander, 71665 Vaihingen an der Enz (DE); Thiel, Walter, 71409 Schwaikheim (DE)
(74) Vertreter: Mammel und Maser Patentanwälte PartG mbB

(56) Entgegenhaltungen:
- EP-A1- 2 666 599
- EP-A1- 2 728 363
- WO-A1-2012/069056
- AT-B- 387 347
- US-A- 3 630 391
- US-B2- 8 186 733

## Beschreibung

Die Erfindung betrifft ein Handlingsverfahren zum Abführen von zumindest einem aus einem plattenförmigen Material durch zumindest eine Schneidbearbeitung hergestellten Werkstück. Darüber hinaus betrifft die Erfindung eine Handlingsvorrichtung zur Durchführung des Handlingsverfahrens mit einer Halteeinrichtung zum Handhaben von einem Werkstück mit zumindest einem unebenen oder konturierten Flächenabschnitt. Schließlich betrifft die Erfindung ein Fertigungsverfahren zur Herstellung von zumindest einem Werkstück aus einem plattenförmigen Material durch zumindest eine Schneidbearbeitung in einer Bearbeitungsmaschine, bei der das Werkstück zumindest einen unebenen oder konturierten Flächenabschnitt aufweist.

Aus der DE 35 07 282 A1 ist eine Vorrichtung zum Aufnehmen einer Palette bekannt. Diese Vorrichtung umfasst einen Kranschlitten, an welchem ein Querschlitten verfahrbar ist. An diesem Querschlitten ist ein Hubschlitten mittels eines Arbeitszylinders auf und ab bewegbar. An diesem Hubschlitten ist eine Lagerplatte vorgesehen, welche zwei gleich ausgebildete Klappschenkel schwenkbar lagert. Am freien Ende dieser Klappschenkel ist jeweils eine Greifvorrichtung vorgesehen, welche durch eine Schwenkbewegung entlang einer horizontal ausgerichteten Achse von oben seitlich auf die Palette zum Greifen zugeschwenkt werden.

Aus der EP 1 967 301 A1 ist eine maschinelle Anordnung zum Bearbeiten von plattenförmigen Werkstücken, insbesondere von Blechen, bekannt. Diese maschinelle Anordnung umfasst eine Bearbeitungseinrichtung, wie beispielsweise eine Laserschneidmaschine sowie eine Handlingsvorrichtung. An der Handlingsvorrichtung ist eine Tragstruktur vorgesehen, an welcher mehrere Halteeinrichtungen mit Greifern zur Handhabung von ebenen Werkstücken befestigt sind. Die Greifer sind als Sauggreifer ausgebildet und in Gruppen zueinander an der Tragstruktur angeordnet.

Eine solche Handlingsvorrichtung ermöglicht die Entnahme von ebenen, plattenförmigen Werkstücken, welche eine im Wesentlichen geschlossene Oberfläche aufweist. Scharfkantige Erhebungen, wie beispielsweise bei rutschfesten Blechen als auch unebene Werkstücke oder Werkstücke mit unebenen oder konturierten Flächenabschnitten, die beispielsweise eine Nippeloberfläche oder Warzennippeloberfläche aufweisen, können ebenso wenig ergriffen werden wie Lochbleche, die auch einen unebenen Oberflächenverlauf aufweisen können.

Aus der DE 10 2012 207 867 B3 ist eine Bearbeitungsmaschine, wie beispielsweise eine Laserschneidmaschine, bekannt, welche auf einer Werkstückauflage ein plattenförmiges Material aufnimmt. Durch eine schneidende Bearbeitung mit einem Laserschneidkopf werden ein oder mehrere Werkstücke sowie ein Restwerkstück erzeugt. Zum funktionssicheren Handhaben des Restwerkstücks wird eine Handlingsvorrichtung eingesetzt, die einen Tragrahmen aufweist, an welchem eine Halteeinrichtung angeordnet ist. Diese Halteeinrichtung umfasst einen T-Greifer, welcher durch gesondert in das Restwerkstück eingebrachte Öffnungen, die an den T-förmigen Abschnitt des Greifers angepasst sind, eingefahren und anschließend um 90° gedreht wird, so dass darauf folgend eine sichere Abführung des Restwerkstücks ermöglicht ist. Nach dem Ablegen des Restwerkstücks wird der T-Greifer wieder um 90° gedreht, so dass der T-förmige Abschnitt des T-Greifers aus der Öffnung des Restwerkstücks herausgeführt werden kann. Die Entnahme der Werkstücke beziehungsweise der Fertigteile erfolgt bei dieser Bearbeitungsmaschine manuell, da solche Öffnungen für den T-Greifer im Werkstück nicht erwünscht sind.

Des Weiteren ist aus der DE 10 2012 219 127 B3 eine Handhabungseinrichtung zum Handhaben von plattenförmigen Werkstücken bekannt, welche eine Handlingsvorrichtung umfasst, die mittels zwei bewegbaren Halteorganen in eine Öffnung im Werkstück eingeführt wird. Anschließend werden die Halteorgane aktiv auseinander gespreizt, um das Werkstück zur Handlingsvorrichtung zu fixieren, um darauf folgend ein Entladen und Abführen des Werkstücks durchzuführen.

Solche Greifer ermöglichen zwar die Entnahme von Werkstücken mit unebenen beziehungsweise konturierten Flächenabschnitten, jedoch ist dabei erforderlich, dass Eingriffsöffnungen in der Größe für die Halteorgane vorhanden sind, so dass die Halteorgane den Rand der Öffnung hintergreifen können. Ein universeller Einsatz dieser Handhabungsvorrichtung zur Entnahme von Werkstücken mit konturierten oder unebenen Flächenabschnitten ist nur möglich, wenn auch die passenden Eingriffsöffnungen zur Verfügung stehen.

Aus der EP 2 465 806 A1 ist ein Magnetgreifer zum Handhaben von ferromagnetischen Werkstücken bekannt. Solche Magnetgreifer ermöglichen ebenfalls die Handhabung von Werkstücken, die aus einem plattenförmigen Material gefertigt sind. Allerdings ist erforderlich, dass das plattenförmige Material ferromagnetisch ist und einen ebenen Flächenabschnitt zum Greifen des Werkstücks aufweist. Unebene oder konturierte Flächenabschnitte in Werkstücken als auch Werkstücke aus nicht-ferromagnetischem Material, wie beispielsweise Aluminium, können mit solchen Magnetgreifern nicht automatisiert aus einer Bearbeitungsmaschine entnommen werden.

Aus der WO 2012/069056 A1 ist eine Handlingseinrichtung bestehend aus zwei Greifern bekannt, durch welche mehrere Blattlagen Papier von einem Papierstapel getrennt werden können. Diese Greifer weisen zwei aufeinander zubewegbare Finger auf, um die Anzahl der zu greifenden Papierlagen kraftschlüssig dazwischen aufzunehmen.

Aus der AT 387 347 B ist ein Manipulator für in einer Blechbearbeitungsmaschine zu verformende Werkstücke bekannt. Dieser Manipulator umfasst eine rechte und eine linke Zange, welche eine Backe und eine dazu bewegbare Klemmbacke umfasst. Diese bewegbare Klemmbacke wird durch Ansteuerung über einen Luftzylinder geschlossen, sodass ein dazwischen vorgesehenes Blech kraftschlüssig gehalten ist.

Aus der EP 2 666 599 A1 ist eine Roboterhand beschrieben, welche Finger zum Ergreifen von Werkstücken aufweist. Diesbezüglich ist eine Kraftbeaufschlagung notwendig, um das Teil zu greifen. Zusätzlich sind die Greiffinger für die kraftschlüssige Aufnahme von Gegenständen mit einer Antirutschoberfläche ausgestattet.

Aus der US 3,630,391 A ist eine Greifzange bekannt, bei der zwei um eine gemeinsame Achse schwenkbare Greifbacken vorgesehen sind, die durch einen Steuerkeil aus einer geöffneten Position in eine Schließposition überführbar sind, in welchen das plattenförmige Werkstück kraftschlüssig geklemmt gehalten ist.

Aus der EP 2 728 363 A1 ist eine Greifeinrichtung für einen Roboter bekannt. Die Greifeinrichtung umfasst zwei Greifelemente, die durch eine Verfahrbewegung in eine geschlossene und eine offene Position überfahrbar sind. In geschlossener Position kann ein Gegenstand, insbesondere ein Mikrorohr, geklemmt gehalten werden.

Aus der US 8 186 733 B2, auf welche der Oberbegriff der Patentansprüche 1 und 4 basiert, ist ein elektromagnetisch angetriebener 2-Finger-Parallelgreifer bekannt. Dieser elektromagnetische Greifer ist an einem Roboterarm angeschlossen. Der Greifer wird durch eine Bestromung geöffnet. Sobald diese Bestromung unterbrochen ist, wird der Greifer durch einen Stößel mittels einer Feder in eine geschlossene Position übergeführt.

Der Erfindung liegt deshalb die Aufgabe zugrunde, ein Handlingsverfahren und eine Handlingsvorrichtung zur Durchführung des Handlingsverfahrens als auch ein Fertigungsverfahren vorzuschlagen, wodurch eine automatisierte Handhabung und/oder ein Be- und Entladen von Werkstücken in oder aus einer Bearbeitungsmaschine mit hoher Sicherheit ermöglicht ist, welche zumindest einen unebenen oder konturierten Flächenabschnitt aufweisen.

Die der Erfindung zugrunde liegende Aufgabe wird durch ein Handlingsverfahren gelöst, bei welchem eine oder mehrere Halteeinrichtungen gemäß einer der vorgenannten Ausführungsformen an einem Tragrahmen einer Handlingseinrichtung vorgesehen sind, wobei mehrere Halteeinrichtungen in eine Ebene des zu greifenden Randabschnitts des Werkstücks übergeführt und das Formschlussstück des Greifers der Halteeinrichtung in eine Greifposition bewegt wird, in welcher der zu ergreifende Randabschnitt des Werkstücks von dem U-förmigen Greifraum des Formschlussstückes umgriffen wird, zumindest einen Greifer umfasst, der an einem Ende eines Greifarmes ein Formschlussstück aufweist, welches einen oberen und unteren Greifabschnitt aufweist, die zueinander beabstandet und aufeinander zuweisend ausgerichtet sind und beide am selben Ende des Greifarmes durch einen Anschlagabschnitt begrenzt sind und die Greifabschnitte sowie der dazwischen liegende Anschlagabschnitt einen U-förmigen Greifraum zum formschlüssigen Angreifen an einem Randabschnitt einer Innen- oder Außenkontur des Werkstücks bilden, und jeder Greifer mit dem Greifarm in einem Gehäuse aufgenommen ist, in welchem ein Antrieb vorgesehen ist, in dem der Greifer mittels einer Verfahrbewegung ansteuerbar ist. Dies ermöglicht eine einfache sowie schnelle als auch sichere Positionierung des Greifers und zum Werkstück mit unebenen und/oder konturierten Flächenabschnitten, um diese zu handhaben beziehungsweise nach dem Herstellen des Werkstücks von einer Werkstückauflage zu entnehmen. Gleichzeitig kann das Werkstück sicher entladen und abgeführt werden. Durch die Ansteuerung von einfachen Verfahrbewegungen zum Greifen des Werkstücks kann auch eine kurze Taktzeit für das Ergreifen und Entladen des Werkstücks von einer Werkstückauflage erzielt werden.

Die Halteeinrichtung zum Handhaben von zumindest einem Werkstück mit zumindest einem unebenen oder konturierten Flächenabschnitt weist einen Greifer mit einem Greifarm auf, der an einem Ende ein Formschlussstück umfasst, welches einen oberen und unteren Greifabschnitt aufweist, die mit Abstand zueinander angeordnet und aufeinander zuweisend ausgerichtet und beide am selben Ende des Greifarmes durch einen Anschlagabschnitt begrenzt sind und die Greifabschnitte sowie der dazwischen liegende Anschlagabschnitt einen U-förmigen Greifraum zum formschlüssigen Angreifen an einen Randabschnitt einer Innen- oder Außenkontur des Werkstücks bilden wobei jeder Greifer von einem Gehäuse aufgenommen ist, in dem ein Antrieb vorgesehen ist, durch welchen der Greifer mittels einer Verfahrbewegung ansteuerbar ist. Eine solche Halteeinrichtung weist den Vorteil auf, dass diese einen Randabschnitt des Werkstücks zwischen den Greifabschnitten formschlüssig aufnimmt, wodurch die Handhabung des Werkstücks materialunabhängig ist. Des Weiteren wird durch das formschlüssige Umgreifen des Randabschnittes der Innen- oder Außenkontur des Werkstücks ermöglicht, dass auch Werkstücke mit Funktionsoberflächen, insbesondere Konturen, Riffelungen, Rippungen oder Öffnungen, die auch mit scharfkantigen Zähnen versehen sein können, um beispielsweise rutschfeste Bestandflächen zu bilden, sicher aufgenommen werden können. Ebenso können auch Lochbleche oder rippenförmige Werkstücke ergriffen werden. Auch können Restgitter aus einem Arbeitsraum der Bearbeitungsmaschine abgeführt werden.

Dadurch erhöhen sich die Flexibilität und der Einsatz von solchen Greifern für die Handhabungsaufgabe der jeweiligen Werkstücke. Durch die Ansteuerung einer Verfahrbewegung kann das Formschlussstück des Greifers auf das zu handhabende Werkstück zubewegt werden, so dass das Formschlussstück an einen Randabschnitt des Werkstücks angreift beziehungsweise der U-förmige Greifraum den Randabschnitt umgreift, um darauf folgend eine sichere Aufnahme und Fixierung des Werkstücks zu ermöglichen.

Eine weitere bevorzugte Ausgestaltung des Handlingsverfahrens sieht vor, dass zumindest eine Halteeinrichtung außerhalb einer Außenkontur oder einer äußeren Umrisskante des Werkstücks in der Ebene des Werkstücks positioniert und darauf folgend das Formschlussstück des Greifers zum Überführen in die Greifposition verfahren wird. Dabei kann der Greifer beziehungsweise das Formschlussstück gedreht, verschoben, gespreizt, geschwenkt und/oder entlang zumindest einer Achse verfahren werden. Bei diesem Handlingsverfahren greifen einer oder mehrere Greifer mit dem Formschlussstück an einem äußeren Randabschnitt der Außenkontur des Werkstücks an, um dieses zu handhaben. Es wird also die Außenkontur des Werkstücks für die Handhabung ergriffen.

Eine alternative Ausgestaltung des Handlingsverfahrens sieht vor, dass die zumindest eine Halteeinrichtung in eine Innenkontur des Werkstücks, insbesondere in eine Ausnehmung des Werkstücks, eintaucht und in der Ebene des Werkstücks positioniert sowie darauf folgend das Formschlussstück des Greifers in die Greifposition übergeführt wird. Dabei kann der Greifer beziehungsweise das Formschlussstück gedreht, verschoben, gespreizt, geschwenkt und/oder entlang einer Achse verfahren werden. Auch hier ist bevorzugt eine eindimensionale Verfahrbewegung vorgesehen. Des Weiteren kann alternativ zumindest eine Halteeinrichtung an einer Außenkontur und zumindest eine Halteeinrichtung an einer Innenkontur des Werkstücks formschlüssig angreifen, um die Handhabung durchzuführen.

Beim Ergreifen einer Innenkontur des Werkstücks wird bevorzugt eine Handlingsvorrichtung mit zwei Greifern eingesetzt, die gegeneinander verfahrbare Formschlussstücke aufweisen, so dass nach dem Eintauchen des Greifers in die Innenkontur des Werkstücks die Greifer gegeneinander verfahren und die Formschlussstücke in entgegen gesetzter Richtung zueinander an dem Randabschnitt der Innenkontur, insbesondere die Innenkontur des Werkstücks, eingreifen. Insbesondere Bohrungen oder rechteckförmige oder mehreckige Ausnehmungen können dadurch sicher ergriffen werden. Sofern diese Bohrungen und Ausnehmungen zentrisch oder nahe dem Zentrum des Werkstücks liegen, kann eine Halteeinrichtung genügen, um das Werkstück zu ergreifen und zu entladen.

Das Handlingsverfahren sieht vor, dass die Halteeinrichtung einen Antrieb aufweist, bei dem der Greifer durch Anlegen eines Vakuums gegen eine Rückstellkraft in eine Ausgangsposition gefahren und gehalten sowie nach dem Eintauchen in die Werkstückebene deaktiviert wird, so dass der Greifer mit dem Formschlussstück in einer Greifposition verfahrbar und selbständig in der Greifposition gehalten wird. Dadurch kann eine hohe Sicherheit bei der Handhabung von solchen Werkstücken im Falle eines Druckverlustes, Stromausfalles oder sonstigen Ausfalles der Bearbeitungsmaschine erzielt werden.

Das vorbeschriebene Handlingsverfahren kann sowohl zur Handhabung von Werkstücken in Form eines Gutteiles oder eines Restwerkstückes erfolgen.

Die der Erfindung zugrunde liegende Aufgabe wird des Weiteren durch eine Handlingsvorrichtung zur Durchführung des vorgenannten Handlingsverfahrens gelöst, bei welchem an dem Tragrahmen der Handlingsvorrichtung mehrere Halteeinrichtungen nach einem der anstehend beschriebenen Ausführungsformen vorgesehen ist. Dadurch lassen sich sowohl ebene plattenförmige Werkstücke als auch solche Werkstücke entnehmen, welche zumindest einen unebenen oder konturierten Flächenabschnitt aufweisen, der darüber hinaus an den Konturen scharfkantige Ränder, Zähne oder dergleichen aufweisen kann.

Gemäß einer ersten Ausführungsform sind die Halteeinrichtungen mit dem Befestigungsabschnitt, der vorzugsweise an dem Gehäuse vorgesehen ist, fest an dem Tragrahmen angeordnet. Eine oder mehrere Halteeinrichtungen werden in der Position am Tragrahmen auf die Größe der herzustellenden Werkstücke angepasst. Der Tragrahmen kann zum Greifen des Werkstücks in eine Arbeitsposition übergeführt werden, in welcher die Greifer in der Ausgangsposition zum zu entladenden Werkstück übergeführt sind. Nachfolgend können die Greifer in die Greifposition verfahren, geschwenkt, gedreht und/oder gespreizt werden.

Eine alternative Ausführungsform der Handlingsvorrichtung sieht vor, dass der Tragrahmen zumindest ein Rahmensegment aufweist, welches gegenüber benachbarten Rahmensegmenten durch einen Antrieb verfahrbar ist und die Halteelemente an den Rahmensegmenten befestigt sind. Dadurch kann beispielsweise das Überführen der Halteeinrichtungen aus der Ausgangsposition in die Greifposition bei beispielsweise zwei einander zugeordneten Halteeinrichtungen durch eine Verfahrbewegung des zumindest einen Rahmensegments beziehungsweise durch beide Rahmensegmente erfolgen, die beispielsweise aufeinander zu verfahren werden, um die Halteeinrichtung aus der Ausgangsposition in die Greifposition überzuführen. Bei einer solchen Ausführungsform kann die Halteeinrichtung vereinfacht ausgebildet sein, indem diese nur aus dem Greifer mit dem Formschlussstück besteht, der über einen Befestigungsabschnitt am Greifarm an dem Rahmensegment befestigt ist.

Bevorzugt ist der Greifer entlang wenigstens einer Raumrichtung verschiebbar am Gehäuse aufgenommen. Vorzugsweise liegt die eine Raumrichtung in einer Achse in Richtung des U-förmigen Greifraumes. Dadurch kann beispielsweise bei einem auf einer Werkstückauflage aufliegenden Werkstück eine Verfahrbewegung des Greifers entlang einer Horizontalen erfolgen, so dass das Formschlussstück des Greifers den Randabschnitt des Werkstücks in der Greifposition umgreift.

Des Weiteren kann der Greifer alternativ durch einen Antrieb drehbar zum Gehäuse angetrieben sein, wobei die Drehachse zumindest abschnittsweise in der Längsachse des Greifarms des Greifers liegt. Dadurch kann beispielsweise der Greifer unmittelbar benachbart zu einem Werkstück in einer Ausgangsposition positioniert werden, wobei durch eine Drehbewegung des Greifers am Formschlussstück das zu greifende Werkstück bewegt und in eine Greifposition übergeführt wird, so dass der Randabschnitt des Werkstücks innerhalb des Greifraumes des Formschlussstücks positioniert wird.

Eine bevorzugte Ausgestaltung der drehbaren Aufnahme des Greifers zum Gehäuse sieht vor, dass das Formschlussstück exzentrisch zur Drehachse des Greifarms ausgerichtet ist. Dadurch kann der Greifer beispielsweise im deaktivierten Zustand vom greifenden Werkstück hinreichend beanstandet und zur Durchführung der Handhabung entsprechend zum Angreifen an dem Werkstück auf dieses zugeschwenkt werden.

Eine alternative Ausgestaltung der Halteeinrichtung umfasst zwei Greifer mit jeweils einem Greifarm, welcher jeweils ein Formschlussstück aufweist, die gegenläufig zueinander ausgerichtet und gegenläufig zueinander verfahrbar sind. In einem Ausgangszustand sind die beiden Greifarme der Greifer quasi deckungsgleich zueinander angeordnet, so dass eine kleine Grundfläche durch die Formschlussstücke geschaffen ist. Insbesondere nach dem Einführen der Halteeinrichtung in eine Innenkontur, wie beispielsweise eine Ausnehmung des zu handhabenden Werkstücks, werden die Formschlussstücke gegenläufig zueinander verfahren, so dass die gegenläufig ausgerichteten U-förmigen Greifräume jeweils in entgegen gesetzter Richtung an einem Rand der Ausnehmung am Werkstück angreifen.

Die Halteeinrichtung nimmt im Gehäuse vorteilhafterweise einen Antrieb auf, der den zumindest einen Greifer antreibt, wobei der Greifer mit einem Vakuum beaufschlagbar und in eine Ausgangsposition verfahrbar ist sowie beim Abschalten des Vakuums selbständig in eine Greifposition überführbar ist. Diese Ansteuerung weist den Vorteil auf, dass im Falle eines Druckverlustes oder eines Stromausfalles sich der oder die Greifer selbständig in der Greifposition halten, so dass während einer Handhabung das gegriffene Werkstück nicht verloren wird, sondern sicher durch die Greifer gehalten ist.

An dem Greifarm kann benachbart zum Formschlussstück ein Anschlag vorgesehen sein, der eine Eintauchtiefe des Greifers in eine Ebene des zu handhabenden Werkstücks begrenzt. Dadurch kann die Positionierung des U-förmigen Greifraums benachbart zum zu greifenden Randabschnitt des Werkstücks selbständig eingenommen werden. Zum leichten und sicheren Einführen des zu greifenden Flächenabschnitts am Werkstück in den U-förmigen Greifraum kann zumindest einer der beiden Greifabschnitte eine Einlaufschräge aufweisen.

Bevorzugt ist zwischen dem Greifarm des Greifers und dem Formschlussstück eine Schnellwechselschnittstelle vorgesehen. Diese ermöglicht einen einfachen Austausch von Formschlussstücken, um eine Anpassung der Halteeinrichtung an eine neue Handhabungsaufgabe zu ermöglichen, bei welcher Werkstücke mit einer anderen Materialstärke zu handhaben sind. Formschlussstücke können mit verschieden großen Greifräumen ausgebildet sein, so dass eine entsprechende Anpassung an die Stärke des plattenförmigen Materials möglich ist. Alternativ kann der Greifer eine Schnellwechselschnittstelle an einem einem Formschlussstück gegenüber liegenden Ende aufweisen, so dass ein schnelles Auswechseln des Greifers zum Antrieb oder einer Führung des Antriebs möglich ist.

Die der Erfindung zugrunde liegende Aufgabe wird des Weiteren durch ein Fertigungsverfahren zur Herstellung von zumindest einem Werkstück aus einem plattenförmigen Material durch zumindest eine trennende Bearbeitung, wie beispielsweise eine Schneidbearbeitung oder eine Stanzbearbeitung, in einer Bearbeitungsmaschine gelöst, bei der das Werkstück nach einem Handlingsverfahren nach einem der vorstehenden Ausführungsformen von einer Werkstückauflage der Bearbeitungsmaschine entfernt wird. Durch die Einbindung des Handlingsverfahrens in das Fertigungsverfahren kann eine vollautomatisierte Herstellung von Werkstücken aus plattenförmigen Materialien ermöglicht sein, welche unebene oder konturierte Flächenabschnitte aufweisen, die mit Magnetgreifern oder Sauggreifern nicht entnommen werden können. Ebenso können auch Restwerkstücke vollautomatisch von der Werkstückauflage entnommen werden.

Eine bevorzugte Ausführungsform des Fertigungsverfahrens sieht vor, dass in einem Restwerkstück, welches an einer Außenkontur des Werkstücks angrenzt, eine Einhandöffnung oder Greiföffnung eingebracht wird, in welche die Halteeinrichtung zur Durchführung des Handlingsverfahrens eingetaucht wird. Dabei werden Ausnehmungen oder Freiräume in das Restwerkstück eingebracht, um ein Formschlussstück des Greifers der Halteeinrichtung darin einzutauchen und anschließend das Werkstück zu greifen. Insbesondere bei Werkstücken, die keine oder nur sehr kleine Ausnehmungen aufweisen und zumindest teilweise vom Restwerkstück umgeben sind, kann die zusätzliche Einbringung einer Einhandöffnung oder Greiföffnung die automatisierte Handhabung für das vollautomatische Fertigungsverfahren ermöglichen.

Alternativ können zur automatisierten Entladung oder Handhabung der Werkstücke aus der Bearbeitungsmaschine eine über zumindest einen Steg verbundene Haltelasche oder einen Hilfsrahmen ausgeschnitten werden, an welchem die Halteeinrichtung zur Entnahme des Werkstücks angreift. Solche Haltelaschen oder Hilfsrahmen können anschließend aufgrund der Stegverbindung, die bevorzugt als Mikro-Joint ausgebildet sind, in einfacher Weise entfernt werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht einer maschinellen Anordnung mit einer Bearbeitungsmaschine und einer Handlingsvorrichtung,
Figur 2a eine schematische Ansicht von zwei Halteeinrichtungen in einer Ausgangsposition, welche einem zu handhabenden Werkstück zugeordnet sind,
Figur 2b eine schematische Ansicht von zwei Halteeinrichtungen in einer Greifposition zum zu handhabenden Werkstück,
Figur 3 eine schematische Ansicht von oben zur Positionierung der Halteeinrichtungen für beispielsweise ein rechteckförmiges Werkstück,
Figur 4 eine schematische Ansicht mit einer alternativen Halteeinrichtung zu Figur 2,
Figur 5 eine perspektivische Ansicht einer weiteren alternativen Ausführungsform zur Figur 2,
Figur 6 eine perspektivische Ansicht einer weiteren alternativen Ausführungsform zu Figur 2,
Figur 7 eine schematische Ansicht einer weiteren alternativen Halteeinrichtung zu Figur 2,
Figur 8 eine schematische Ansicht einer weiteren alternativen Halteeinrichtung zu Figur 7,
Figur 9 eine schematische Schnittansicht der Halteeinrichtung gemäß Figur 8 entlang der Linie A-A,
Figuren 10 bis 12 schematische Ansichten einer mit Vakuum betriebenen Halteeinrichtung,
Figur 13 eine schematische Ansicht einer weiteren nicht zur Erfindung gehörende Ausführungsform der Halteeinrichtung zu Figur 7,
Figur 14 eine schematische Ansicht einer weiteren alternativen Ausführungsform der Halteeinrichtung zu Figur 8,
Figur 15 eine schematische Ansicht einer alternativen Ausführungsform eines Formschlussstücks,
Figur 16 eine schematische Ansicht einer weiteren alternativen Ausführungsform eines Tragrahmens zu Figur 2,
Figur 17 eine schematische Ansicht von oben auf die Ausführungsform zu Figur 16,
Figur 18 eine schematische Ansicht von oben auf ein bearbeitetes plattenförmiges Material mit einer Eintauchöffnung im Restwerkstück zur Aufnahme des Werkstücks, und
Figur 19 schematische Ansichten von oben auf zu entnehmende Werkstücke mit dazu angeordneten Hilfsrahmen.

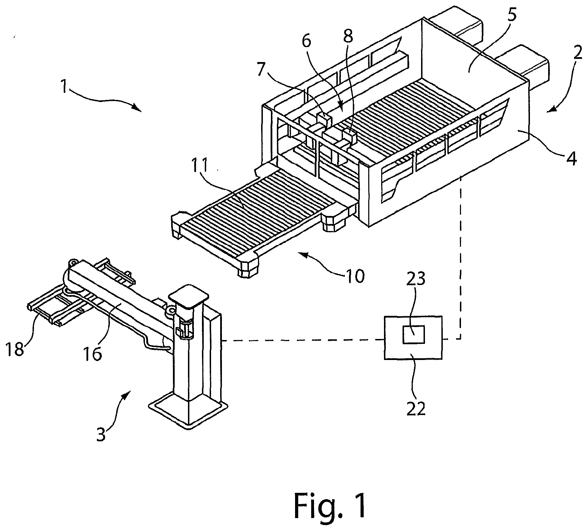

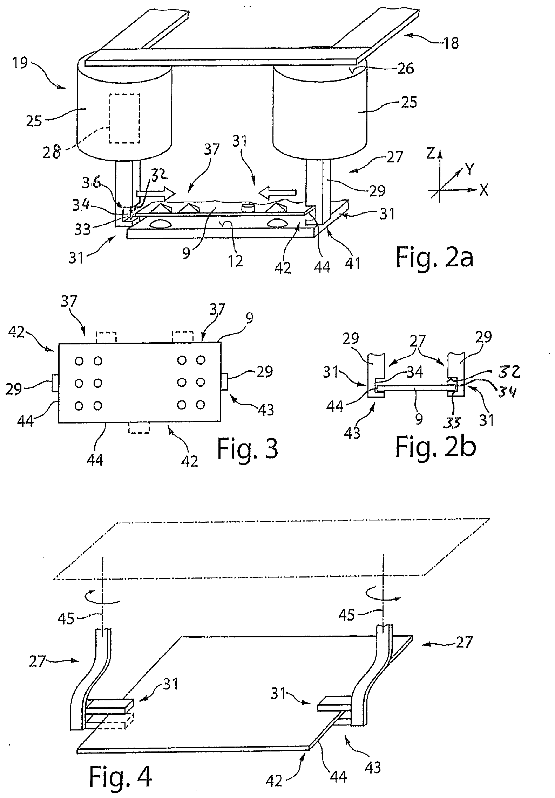

In Figur 1 ist perspektivisch eine maschinelle Anordnung 1 dargestellt. Diese umfasst eine Bearbeitungsmaschine 2, welche beispielsweise als eine Laserschneidmaschine ausgebildet ist. Des Weiteren umfasst die maschinelle Anordnung 1 eine Handlingsvorrichtung 3. Die Bearbeitungsmaschine 2 besitzt einen von einer Einhausung 4 begrenzten Arbeitsbereich 5, in dem als Fertigungseinheit eine Schneideinheit 6 mit Laserschneidköpfen 7, 8 in einer horizontalen Bewegungsebene verfahrbar ist. Ein Werkstück 9, das in den Figuren 2 und 3 beispielsweise in einem bearbeiteten Zustand dargestellt ist, wird dem Arbeitsbereich 5 der Bearbeitungsmaschine 2 zur schneidenden Bearbeitung als unbearbeitetes plattenförmiges Material, insbesondere Rohblech, zugeführt. Dies erfolgt ausgehend von einem Palettenwechsler 10 der Bearbeitungsmaschine 2, der vor dem Arbeitsbereich 5 angeordnet ist. An dem Palettenwechsler 10 ist das unbearbeitete Werkstück 9 auf einer als Werkstückauflage 12 vorgesehenen Palette 11 gelagert. Gemeinschaftlich mit der Palette 11 wird das unbearbeitete Werkstück 9 ausgehend von dem Palettenwechsler 10 in den Arbeitsbereich 5 der Bearbeitungsmaschine 2 verfahren. In dem Arbeitsbereich 5 erfolgt dann die schneidende Bearbeitung des Werkstücks mittels der Schneideinheit 6.

Nach dem Beenden der schneidenden Bearbeitung wird die Palette 11 mit dem bearbeiteten Werkstück 9 zurück auf den Palettenwechsler 10 bewegt. Das bearbeitete Werkstück 9 befindet sich nun in einem Zustand, wie dies beispielsweise in den Figuren 2 und 3 dargestellt ist.

Die maschinelle Anordnung 1 wird durch eine Steuereinheit 22 angesteuert und überwacht. Auf dieser Steuereinheit 22 laufen eine oder mehrere Bearbeitungsprogramme 23, welche Steuerbefehle ausgeben, um sowohl die Bearbeitungsmaschine 2 als auch die Handlingsvorrichtung 3 entsprechend den vorbestimmten Arbeitsabläufen anzusteuern.

Die Handlingsvorrichtung 3 umfasst beispielsweise einen horizontal verschwenkbaren Schwenkarm 16, an welchem ein Tragrahmen 18 aufgehängt ist. Der Tragrahmen 18 ist im Wesentlichen rechteckförmig und gegenüber dem Schwenkarm 16 um eine vertikale Achse schwenkbeweglich aufgenommen. Außerdem kann er in vertikaler Richtung angehoben und abgesenkt werden. An einer nach unten weisenden Seite des Tragrahmens 18 sind eine oder mehrere Halteeinrichtungen 19 vorgesehen, die nachfolgend in den einzelnen Ausführungsbeispielen näher beschrieben werden.

In Figur 2a ist eine erste Ausführungsform der Halteeinrichtung 19 dargestellt. Die Halteeinrichtung 19 umfasst ein Gehäuse 25, an welchem sich ein Befestigungsabschnitt 26 befindet, über welchen die Halteeinrichtung 19 an dem Tragrahmen 18 befestigt ist. Das Gehäuse 25 nimmt einen Greifer 27 auf, der gegenüber dem Gehäuse 25 in zumindest einer Raumachse verfahrbar oder um zumindest eine Raumachse verdrehbar ist. In dem Gehäuse 25 ist ein Antrieb 28 vorgesehen, welcher elektrisch oder pneumatisch angetrieben ist. Alternativ kann auch eine hydraulische Ansteuerung vorgesehen sein.

Der Greifer 27 umfasst einen Greifarm 29, welcher über eine Schnellwechselschnittstelle mit dem Antrieb 28 zum einfachen und schnellen Austausch verbunden sein kann. An einem freien Ende des Greifarms 29 des Greifers 27 ist ein Formschlussstück 31 vorgesehen, welches einen ersten und zweiten Greifabschnitt 31, 32 aufweist, die aufeinander zuweisend - vorzugsweise parallel zueinander - ausgerichtet sind. Die Greifabschnitte 32, 33 sind durch einen Anschlagabschnitt 34 zueinander beabstandet und bilden einen U-förmigen Greifraum 36. Dieser U-förmige Greifraum 36 ist bei dieser Ausführungsform, bei welcher der Greifarm 29 beispielsweise einen quadratischen Querschnitt aufweist, als Nut ausgebildet, die in den stabförmigen Greifarm 29 eingebracht ist.

Der Abstand der Greifabschnitte 32, 33 des Formschlussstücks 31 ist an die zu ergreifende oder zu handhabende Materialstärke des Werkstücks 9 angepasst.

Die Werkstückauflage 12 ist gemäß dieser Ausführungsform in Figur 2 beispielsweise als Kugelauflage dargestellt. Alternativ kann auch eine Bürstenauflage oder dergleichen vorgesehen sein.

Auf dieser Werkstückauflage 12 liegt das bearbeitete Werkstück 9 auf, welches zumindest einen Flächenabschnitt 37 aufweist, der gemäß dem Ausführungsbeispiel uneben ist. Beispielsweise sind Warzennippel dargestellt. Alternativ können gelochte Erhebungen mit scharfkantigen oder gezahnten Rändern zur Ausbildung von rutschfesten Oberflächen vorgesehen sein. Des Weiteren können unebene Lochbleche, Riffelbleche mit Konturen oder dergleichen durch diese Halteeinrichtung 19 ergriffen werden.

Beispielsweise sind zwei Halteeinrichtungen 19 an dem Tragrahmen 18 mit einem vorbestimmten Abstand zueinander angeordnet, so dass die Greifer 27 bei der Anordnung jeweils in einer Ausgangsposition 41 einen Abstand aufweisen, der größer als eine Außenkontur 42 des Werkstücks 9 ist. Dadurch kann die Handlingsvorrichtung 3 den Tragrahmen 18 und somit die Halteeinrichtung 19 von oben auf das Werkstück 9 zuführen und in eine Arbeitsposition überführen, so dass die Greifer 27 in eine Ebene des Werkstücks 9 eintauchen und das Formschlussstück 31 zur Außenkontur 42 des Werkstücks 9 mit Abstand ausgerichtet ist. Der untere Greifabschnitt 33 liegt dabei unterhalb der Werkstückebene und der obere Greifabschnitt 32 des Formschlussstücks 31 oberhalb der Werkstückebene. Darauf folgend wird mittels des Antriebs 28 jeder Halteeinrichtung 19 der jeweilige Greifer 27 entlang einer Linearachse, beispielsweise einer X-Achse, verfahren, so dass die einander gegenüber liegenden Greifer 27 aus der Ausgangsposition 41 in eine Greifposition 43 aufeinander zu bewegt werden, wodurch der jeweilige Greifraum 36 die Außenkontur 42 des Werkstücks 9 umgreift. Dies ist in Figur 2b dargestellt.

Nach der Einnahme der Greifposition 43 der Halteeinrichtungen 19 liegt jeweils ein Abschnitt der Außenkontur 42 innerhalb des U-förmigen Greifraums 36 des Formschlussstücks 31. Vorzugsweise liegt ein jeweiliger Randabschnitt 44 der Außenkontur 42 des Werkstücks 9 an dem jeweiligen Anschlagabschnitt 34 des Formschlussstücks 31 an, so dass ein Formschluss gegeben ist und das Werkstück 9 sicher ergriffen wird. Anschließend kann der Tragrahmen 18 nach oben abgehoben und ein Entladevorgang eingeleitet werden.

Zur einfachen und schnellen Anpassung der Greifer 27 an verschiedene Materialstärken der Werkstücke 9 kann alternativ zur Ausbildung einer Schnellwechselschnittstelle zwischen dem Greifarm 29 und dem Antrieb 28 bevorzugt vorgesehen sein, dass der Greifarm 29 fest mit dem Antrieb 28 verbunden ist und der Greifarm 29 am weiteren Ende eine Schnittstelle aufweist, um auswechselbar das Formschlussstück 31 aufzunehmen. Beispielsweise können Formschlussstücke 31 mit voneinander abweichenden Abständen zwischen den Greifabschnitten 32, 33 für verschiedene Materialstärken der Werkstücks 9 vorgesehen sein. Der Abstand der Greifabschnitte 32, 33 zueinander ist jedenfalls geringfügig größer als die Materialstärke des zu bearbeitenden plattenförmigen Materials, aus welchem das Werkstück 9 gebildet ist, auszuwählen. Des Weiteren kann die Länge der Greifabschnitte 32, 33, die gegenüber dem Anschlagabschnitt 34 hervorstehen, unterschiedlich ausgebildet sein. Ebenso kann wahlweise auch die Breite der Greifabschnitte 32, 33 variiert werden, um ein formschlüssiges Angreifen an dem Werkstück 9 zu ermöglichen. Sofern beispielsweise die Greifabschnitte 32, 33 nur geringfügig in das Werkstück 9 eingreifen können, erstrecken sich die Greifabschnitte 32, 33 länger entlang dem Randabschnitt 44 an einer Innenkontur 47 oder Außenkontur 42 des Werkstücks 9.

Das in Figur 2a dargestellte Werkstück 9 weist beispielsweise eine rechteckförmige Außenkontur 42 auf, welche in Figur 3 in der Draufsicht dargestellt ist. Bei einem solchen Werkstück 9 können beispielsweise zwei einander gegenüber liegende Halteeinrichtungen 19 zur sicheren Handhabung genügen.

Sofern eine Handhabung an den Schmalseiten eines solchen Werkstücks 9 nicht möglich wäre, da diese Kanten schwierig oder nicht zu greifende Verläufe oder Konturen aufweisen, können die Halteeinrichtungen 19 auch zur Längsseite des Werkstücks 9 positioniert werden. Bei dieser Anordnung werden beispielsweise drei Halteeinrichtungen 19 eingesetzt, welche in einem Dreieck zueinander ausgerichtet sind, so dass zwei Halteeinrichtungen 19 an einer Seitenkante und die dritte Halteeinrichtung 19 gegenüber liegend und zwischen den beiden anderen Halteeinrichtungen an der anderen Seitenkante des Werkstücks 9 angreifen. Dies ist strichliniert dargestellt.

Zwei oder drei Halteeinrichtungen 19 werden beispielsweise auch bei ovalen oder runden als auch mehreckigen Werkstücken 9 eingesetzt, um ein sicheres Handhaben zu ermöglichen.

In Figur 4 ist schematisch eine alternative Ausführungsform eines Greifers 27 für die Halteeinrichtung 19 zu Figur 2 dargestellt. Bei dieser Ausführungsform ist der Greifarm 29 exzentrisch zu einer Drehachse 45 im Gehäuse 25 geformt, um welche der Greifer 27 durch den Antrieb 28 gedreht wird. Das Formschlussstück 31 liegt außerhalb der Drehachse 45 und ist beispielsweise um 90° gedreht zum Greifarm 27 ausgerichtet. Beispielsweise kann der Greifarm 29 eine geschwungene Form aufweisen, so dass die freien Enden der Greifabschnitte 32, 33 in der Drehachse 45 und der Anschlagabschnitt 34 entfernt dazu liegen. Ein solcher Greifer 27 ermöglicht, dass diese in einer Ausgangsposition weiter zur Außenkontur 42 des Werkstücks 9 beabstandet sind und dennoch nach der Durchführung einer Drehbewegung beispielsweise um 90° um die Drehachse 45 an dem Randabschnitt 44 des Werkstücks 9 in der Greifposition 43 eingreifen, so dass der U-förmige Greifraum 36 des Formschlussstückes 31 die Außenkontur 42 des Werkstücks 9 umgreift.

Ergänzend zur Drehbewegung des Greifers 27, um diesen von der Ausgangsposition 41 in die Greifposition 43 überzuführen, kann auch eine Verfahrbewegung entlang einer Linearachse, insbesondere eine Verfahrbewegung in der Ebene des Werkstücks 9, überlagert sein.

Die Ausführungsbeispiele gemäß den Figuren 2a, 2b, 3 und 4 zeigen den Einsatz der Halteeinrichtungen 19 beim Angreifen an der Außenkontur 42 des Werkstücks 9.

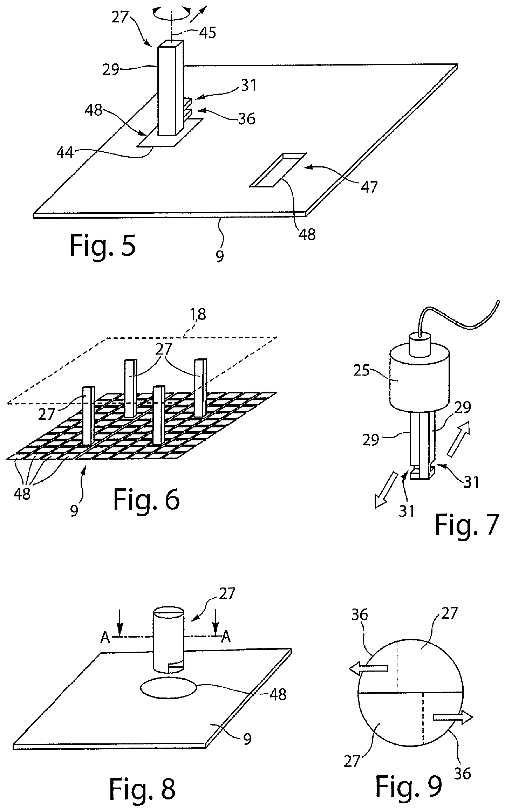

Alternativ kann die Halteeinrichtung 19 auch an einer Innenkontur 47 des Werkstücks 9 angreifen. Dies ist beispielsweise in Figur 5 dargestellt. In dem Werkstück 9 ist eine rechteckige Ausnehmung 48 der Innenkontur 47 vorgesehen, welche konstruktionsbedingt in dem Werkstück 9 eingebracht ist. In eine solche Ausnehmung 48 kann der Greifer 27 der Halteeinrichtung 19 eintauchen, so dass das Formschlussstück 31 in der Werkstückebene des Werkstücks 9 liegt, das heißt, dass der untere Greifabschnitt 33 unterhalb der Unterseite des Werkstückes 9 liegt und der Greifabschnitt 32 oberhalb einer Oberseite des Werkstücks 9 positioniert ist. Darauf folgend kann der Greifer 27 in die Greifposition 43 übergeführt werden, so dass ein Randabschnitt 44 der Ausnehmung 48 von dem Greifraum 36 des Formschlussstücks 31 umgriffen ist. Alternativ kann das Überführen in die Greifposition 43 anstelle einer Verfahrbewegung entlang einer Linearachse auch durch ein Drehen um die Drehachse 45 und/oder eine Überlagerung beider Bewegungen erfolgen.

Bei dem Ausführungsbeispiel gemäß Figur 5 ist nur eine Halteeinrichtung 19 zur Handhabung des Werkstücks 9 dargestellt. Dies kann genügen, sofern die Werkstücke 9 kleine geometrische Abmessungen aufweisen und/oder die Ausnehmung 48 in einem mittleren Bereich des Werkstücks 9 liegt. Bevorzugt sind zwei oder mehrere Halteeinrichtungen 19 vorgesehen, wobei die weiteren Halteeinrichtungen 19 sowohl in eine weitere Ausnehmung 48 als auch an einer Außenkontur 42 des Werkstücks 9 angreifen können.

Bei dieser alternativen Ausführungsform des Formschlussstückes 31 ist vorgesehen, dass der Greifarm 29 beispielsweise einen quadratischen Querschnitt aufweisen kann und die Greifabschnitte 32, 33 als rechteckförmige Elemente ausgebildet sind, die an einer Seitenkante des Greifarms 29 zur Bildung des U-förmigen Greifraumes 36 angeordnet sind. Alternativ können die Greifabschnitte 32, 33 auch aus einem Rundmaterial ausgebildet sein.

In Figur 6 ist beispielsweise die Handhabung eines als Lochblech oder Gitterblock ausgebildeten Werkstücks 9 dargestellt, bei welchem beispielsweise vier Halteeinrichtungen 19 an dem Tragrahmen 18 angeordnet sind. Die Halteeinrichtungen 19 weisen Formschlussstücke 31 gemäß den Greifern 27 in Figur 2a oder Figur 5 auf. Diese vier Halteeinrichtungen können gleichzeitig in die jeweilige Ausnehmung 48 des Werkstücks 9 eintauchen. Durch eine Drehbewegung der Greifer 27 der Halteeinrichtungen 19 können die Formschlussstücke 31 in die Greifposition 43 übergeführt werden. Alternativ können die Greifer 27 auch durch eine Verfahrbewegung in Eingriff mit den Randabschnitten 44 der Ausnehmungen 48 beziehungsweise den Stegen des Lochbleches gelangen, wobei vorzugsweise zwei einander gegenüber liegende Halteeinrichtungen 19 in entgegengesetzter Richtung verfahren werden, um ein sicheres Aufnehmen des Werkstücks 9 zu ermöglichen.

Durch die Anordnung von beispielsweise vier solcher Halteeinrichtungen 19, welche an der Innenkontur 47 des Werkstücks 9 angreifen, können auch wenig biegesteife plattenförmige Materialien sicher gehandhabt werden.

In Figur 7 ist eine weitere alternative Ausführungsform der Halteeinrichtung 19 zu Figur 2a dargestellt. Bei dieser Ausführungsform sind zwei Greifer 27 gemäß der Ausführungsform in Figur 2a benachbart zueinander an dem Gehäuse 25 angeordnet, wobei die Formschlussstücke 31 um 180° versetzt zueinander ausgerichtet sind. Diese Greifer 27 werden über einen Antrieb 28 derart angetrieben, dass diese gegenläufig auseinander bewegt werden, so dass die beiden U-förmigen Greifräume 36 der Formschlussstücke 31 jeweils an einem Randabschnitt 44 der Ausnehmung 48 angreifen können. Solche Halteeinrichtungen 19 können bei Werkstücken 9 gemäß den Figuren 5 oder 6 eingesetzt werden. Damit der Bauraum für das Eintauchen der Halteeinrichtung 19 in einer Ausnehmung 48 gering ist, werden die beiden Greifer 27 in einer Ausgangsposition 41 deckungsgleich zueinander angeordnet.

Bei der Ausführungsform gemäß Figur 7 weist jeder Greifer beispielsweise einen quadratischen oder rechteckförmigen Querschnitt auf, wobei die einander gegenüber liegenden Flächen, an denen die Greifer 27 einander liegen, plan ausgebildet sind.

In Figur 8 ist eine alternative Ausführungsform der Greifer 27 zu Figur 7 dargestellt. In Figur 9 ist eine schematische Schnittansicht entlang der Linie A-A in Figur 8 dargestellt. Bei dieser Ausführungsform bilden die beiden einander zugeordneten und gegenläufig verfahrbaren Greifer 27 in der Ausgangsposition 41 einen kreisrunden Querschnitt, wie dies in Figur 9 dargestellt ist. Solche Querschnitte sind bevorzugt für runde Ausnehmungen 48 vorgesehen. Nach dem Eintauchen der Greifer 27 in die Werkstückebene des Werkstücks 9 werden diese auseinander verfahren, so dass zusätzlich zum Ergreifen des jeweiligen Randabschnitts 44 an der Ausnehmung 48 durch den Greifraum 36 des Formschlussstücks 31 noch eine Abstützung der Ausnehmung 48 über den zylindrischen Wandabschnitt des Greifers 27 erfolgen kann.

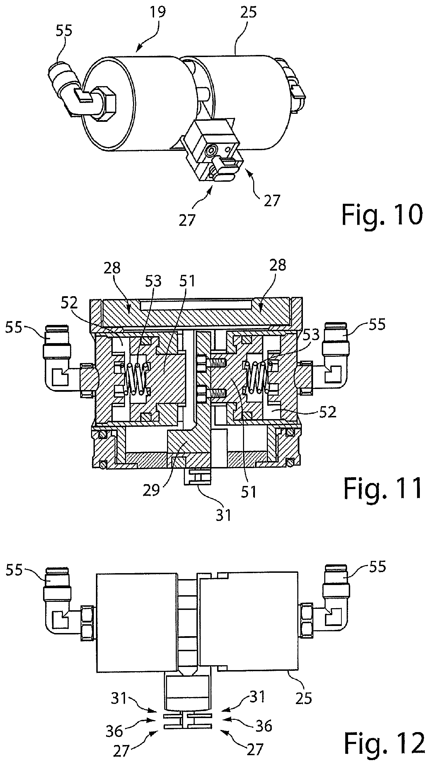

In Figur 10 ist eine perspektivische Ansicht einer Halteeinrichtung 19 mit einem Antrieb 28 dargestellt, der mittels Vakuum betrieben ist. Figur 11 zeigt einen Vollschnitt der Halteeinrichtung 19 gemäß Figur 10, bei der der Greifer 27 in einer Ausgangsposition angeordnet ist. Figur 12 zeigt die Halteeinrichtung 19 in der Greifposition 43.

Bei dieser Ausführungsform sind die Formschlussstücke 31, welche auswechselbar am Greifarm 29 angeordnet sind, jeweils mit einem Kolben 51 verfahrbar angetrieben. In einer Ausgangsposition 41 ist ein innerer Kolbenraum 52 über einen Anschluss 55 mit Vakuum beaufschlagt, so dass der Kolben 51 entgegen einem Kraftspeicherelement 53, insbesondere einer Druckfeder, im Kolbenraum 52 verfahren wird, so dass die beiden entgegen gesetzt ausgerichteten Formschlussstücke 31 eine minimale Eintauchfläche einnehmen, wie dies in den Figuren 10 und 11 dargestellt ist. Nachdem die Halteeinrichtung 19 mit den Formschlussstücken 31 in der Werkstückebene des Werkstücks 9 positioniert ist, wird das Vakuum abgeschalten, so dass die Formschlussstücke 31 durch die Kraftspeicherelemente 53 in eine Greifposition 43 übergeführt werden, wie dies in Figur 12 dargestellt ist. Für die Aktivierung der Halteeinrichtung 19, um das Werkstück 9 freizugeben, ist wiederum erforderlich, dass ein Vakuum angelegt wird, damit die Greifer 27 zusammengefahren werden. Diese Ausführungsform weist den Vorteil auf, dass bei einem Systemausfall die Greifposition 43 aufrecht erhalten bleibt und das Werkstück 9 sich von der Halteeinrichtung 19 nicht löst.

Sofern eine Ausnehmung im Werkstück 9 mittig oder nahe eines Schwerpunktes des Werkstücks 9 liegt, kann eine solche Halteeinrichtung 19 für eine Handhabungsaufgabe genügen.

Ein alternativer Antrieb 28 für die Halteeinrichtung 19 gemäß den Figuren 10 bis 12 kann darin bestehen, dass anstelle dem Vakuumantrieb ein Druckluftantrieb oder ein elektromagnetischer Antrieb vorgesehen ist, das heißt, dass analog zum Anlegen eines Vakuums durch eine Druckluftbeaufschlagung oder eine Bestromung eine Magnetkraft erzeugt und somit eine Bewegung des Kolbens 51 erzielt werden kann.

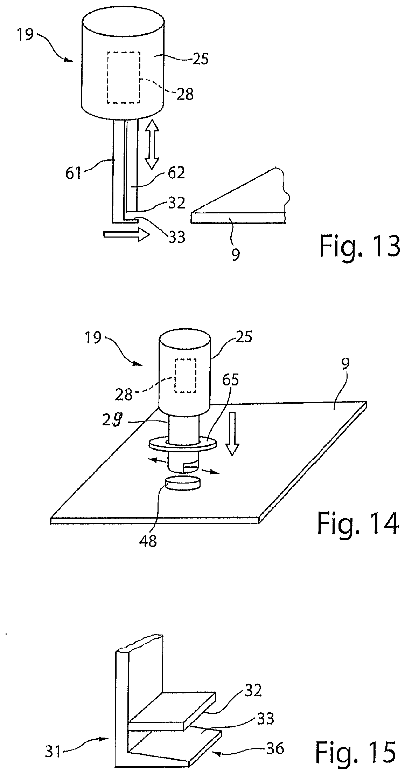

In Figur 13 ist eine weitere nicht zur Erfindung gehörende Ausführungsform einer Halteeinrichtung 19 dargestellt. Bei der Ausführungsform ist ein zweiteiliger Greifer 27 vorgesehen, wobei an einem ersten Greifteil 61 ein unterer Greifabschnitt 33 und an einem zweiten Greifteil 62 ein oberer Greifabschnitt 32 ausgebildet ist. Das zweite Greifteil 62 ist gegenüber dem ersten Greifteil 61 verfahrbar, um beispielsweise die Höhe des Greifraumes 36 auf die Materialstärke des zu handhabenden Werkstücks 9 einzustellen.

In Figur 14 ist eine weitere alternative Ausführungsform einer Halteeinrichtung 19 dargestellt. Die in den Figuren 8 und 9 beschriebene Ausführungsform kann beispielsweise dahingehend modifiziert werden, dass an dem Greifarm 29 ein Anschlag 65 vorgesehen ist, der als kraftschlüssiger Gegenhalter bei wenig eigensteifen Werkstücken 9 eingesetzt wird, um ein sicheres Greifen zu ermöglichen.

In Figur 15 ist eine alternative Ausführungsform eines Formschlussstückes 31 zu jenen in den Figuren 2 und 4 dargestellt. Der untere Greifabschnitt 33 weist vorzugsweise eine Auflaufschräge oder Rampe auf, um ein erleichtertes Einfahren gegenüber der Unterseite des Werkstücks 9 zu ermöglichen. Dies ist insbesondere beim Aufliegen des Werkstücks auf einer Werkstückauflage 12 in Form eines Kugeltisches oder Bürstentisches von Vorteil.

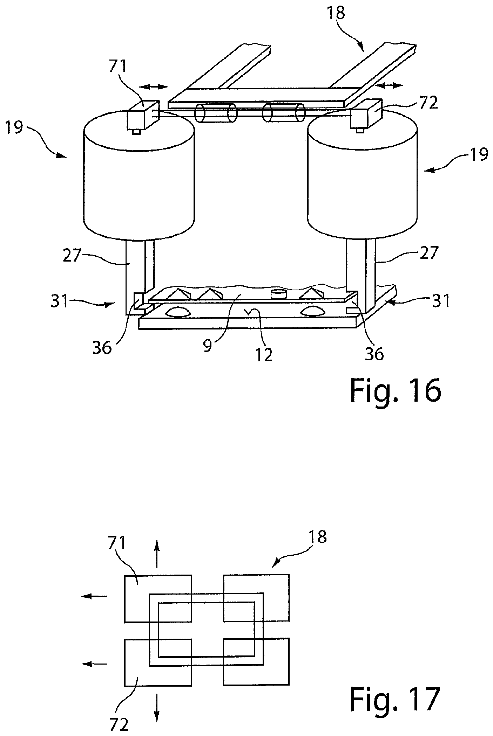

In den Figuren 16 und 17 ist eine alternative Ausführungsform eines Tragrahmens 18 der Handlingseinrichtung 3 dargestellt. Figur 17 zeigt eine Ansicht von oben. Der Tragrahmen 18 weist mehrere Rahmensegmente 71, 72 auf, die zumindest in einer Achse einer Ebene des Tragrahmens 18 verfahrbar sind. Beispielsweise können zwei einander gegenüber liegende Rahmensegmente 71, 72 gegenläufig verfahrbar sein. Bei solchen Tragrahmen 18 können Halteeinrichtungen 19 vorgesehen sein, bei welchen die Greifer 27 einen Befestigungsabschnitt 26 aufweisen und unmittelbar an dem Rahmensegment 71, 72 befestigt sind, wobei das Überführen der Greifer 27 aus der Ausgangsposition 41 in die Greifposition 43 durch die Verfahrbewegung der Rahmensegmente 71, 72 erfolgt. Im Übrigen gelten die vorher beschriebenen Ausführungsformen und Alternativen für die Ausbildung der Greifer 27.

Die vorstehend beschriebenen Ausführungsformen zeigen die Handhabung von Werkstücken 9 in Form von Gutteilen. Eine solche Handhabung kann auch für Restwerkstücke 81 vorgesehen sein. Bei den vorbeschriebenen Ausführungsbeispielen war entweder das Restwerkstück 81 oder das Restgitter bereits entfernt, nicht vorhanden.

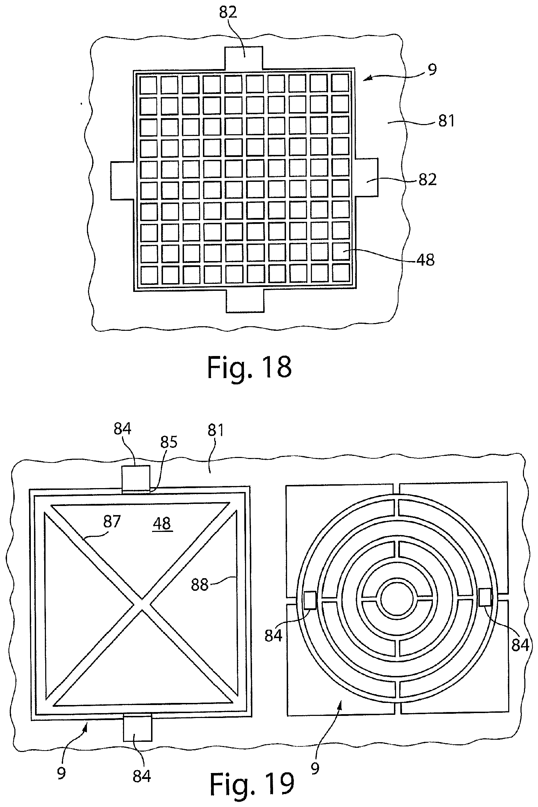

Sofern jedoch keine oder keine geeigneten Freiräume zur Positionierung der Greifer 27 der Halteeinrichtungen 19 vorgesehen sind, kann gemäß dem in Figur 18 dargestellten Ausführungsbeispiel vorgesehen sein, dass in das Restwerkstück 81 Eintauchöffnungen 82 eingebracht werden. Solche Eintauchöffnungen 82 können als Prozessschritt oder Arbeitsschritt in einem Fertigungsverfahren zur Herstellung von solchen Werkstücken eingebunden werden. Beispielsweise sind vier Eintauchöffnungen 82 in das Restwerkstück 81 eingebracht, um das als Lochblech ausgebildete Werkstück 9 zu entnehmen. Bei dieser Ausführungsform sind die Abmessungen der Ausnehmungen 48 derart klein, dass eine Entnahme des Werkstücks 9, wie dies in Figur 6 dargestellt ist, nicht möglich ist.

In Figur 19 ist eine alternative Ausführungsform zur Entnahme von Werkstücken 9 aus einem Restwerkstück 81 dargestellt, sofern keine Eintauchöffnungen 82 vorhanden sind oder erstellt werden können. Beispielsweise kann ein Hilfsrahmen 84 erstellt werden, der über Stege 85, welche als Mikro-Joints ausgebildet sind, am Werkstück 9 befestigt ist. Dadurch kann die Entnahme des Werkstücks 9 durch das Angreifen der Formschlussstücke 31 der Halteeinrichtung 19 an dem Hilfsrahmen 84 erfolgen.

Alternativ könnten bei einem solchen Bauteil die Formschlussstücke 31 auch an den diagonal verlaufenden Streben 87 angreifen. Des Weiteren können die Greifabschnitte 32, 33 des Formschlussstückes 31 alternativ derart kurz ausgebildet sein, dass diese schmäler als der umlaufende Rahmen 88 des Werkstücks 9 sind, so dass die Halteeinrichtungen 19 in die Ausnehmung 48 eintauchen und von innen an dem Rahmen 88 in eine Greifposition 43 übergeführt werden können.

Bei einem gemäß der rechten Darstellung im Restwerkstück 81 ausgebildeten Werkstück 9 gemäß Figur 19 kann der Hilfsrahmen 84 auch innerhalb von Konturen des Werkstücks 9 mittels Stegen 85 vorgesehen sein, um eine sichere Handhabung zu ermöglichen.

## Patentansprüche

1. Handlingsverfahren zum Handhaben eines aus einem plattenförmigen Material zumindest durch eine trennende Bearbeitung, insbesondere schneidende oder stanzende Bearbeitung, hergestellten Werkstücks (9), bei dem mit einer Handlingsvorrichtung (3), welche mehrere Halteeinrichtungen (19) an einem Tragrahmen (18) aufnimmt, das Werkstück (9) ergriffen und abgeführt wird, wobei jede Halteeinrichtung (19) zumindest einen Greifer (27) umfasst, der an einem Ende eines Greifarmes (29) ein Formschlussstück (31) aufweist, welches einen oberen und unteren Greifabschnitt (32, 33) aufweist, die zueinander beabstandet und aufeinander zuweisend ausgerichtet sind und beide am selben Ende des Greifarmes (29) durch einen Anschlagabschnitt (34) begrenzt sind und die Greifabschnitte (32, 33) sowie der dazwischen liegende Anschlagabschnitt (34) einen U-förmigen Greifraum (36) zum formschlüssigen Angreifen an einem Randabschnitt (44) einer Innen- oder Außenkontur (42, 47) des Werkstücks (9) bilden, und jeder Greifer (27) mit dem Greifarm (29) in einem Gehäuse (25) aufgenommen ist, in welchem ein Antrieb (28) vorgesehen ist, in dem der Greifer (27) mittels einer Verfahrbewegung ansteuerbar ist und die mehreren Halteeinrichtungen (19) mit dem Tragrahmen (18) in eine Ebene des zu greifenden Randabschnitts (44) des Werkstücks (9) übergeführt werden und das Formschlussstück (31) der Halteeinrichtung (19) aus einer Ausgangsposition (41) in eine Greifposition (43) bewegt wird, in welcher der zu ergreifende Randabschnitt (44) des Werkstücks (9) von dem U-förmigen Greifraum (36) des Formschlussstücks (31) umgriffen wird, **dadurch gekennzeichnet, dass** die Halteeinrichtung (19) zum Überführen des Greifers (27) in die Ausgangsposition (41) durch Anlegen eines Vakuums gegen eine Rückstellkraft im Antrieb (28) verfahren und gehalten sowie nach dem Eintauchen des Formschlussstücks in die Ebene des Werkstücks (9) deaktiviert wird, so dass der Greifer (27) mit dem Formschlussstück (31) in die Greifposition (43) zum Werkstück (9) verfahren und selbständig in der Greifposition (43) gehalten wird.

2. Handlingsverfahren nach Anspruch 1, **dadurch gekennzeichnet, dass** zumindest eine Halteeinrichtung (19) außerhalb einer Außenkontur (42) des Werkstücks (9) in der Ebene des Werkstücks (9) positioniert und darauf folgend das Formschlussstück (31) des Greifers (27) in die Greifposition (43) verfahren wird.

3. Handlingsverfahren nach Anspruch 1, **dadurch gekennzeichnet, dass** zumindest eine Halteeinrichtung (19) in einer Innenkontur (47) des Werkstücks (9) in der Ebene des Werkstücks (9) positioniert und darauf folgend das Formschlussstück (31) des Greifers (27) in die Greifposition (43) verfahren wird und vorzugsweise die zumindest eine Halteeinrichtung (19), die zum Positionieren in einer Innenkontur (47) des Werkstücks (9) eingesetzt wird, zwei Greifer (27) umfasst, welche nach dem Positionieren der Greifer (27) in der Ebene des Werkstücks (9) durch eine gegenläufige Verfahrbewegung angesteuert werden, so dass die Formschlussstücke (31) der Greifer (27) auseinander gefahren und der Randabschnitt (44) der Innenkontur (47) jeweils zu dem U-förmigen Greifraum (36) des Formschlussstücks (31) vor jedem Greifer (27) umgriffen wird.

4. Handlingsvorrichtung zur Durchführung des Handlingsverfahrens nach einem der Ansprüche 1 bis 3, insbesondere zum Zu- und/oder Abführen von Werkstücken (9) in und aus einer Bearbeitungsmaschine (2), die eine Schneideinheit (6) aufweist, welche durch schneidende Bearbeitung aus einem plattenförmigen Material zumindest ein Werkstück (9) erzeugt, einen bewegbaren Tragrahmen (18) umfasst, an welchem mehrere Halteeinrichtungen (19) zur Handhabung des Werkstücks (9) vorgesehen sind, wobei der Tragrahmen (18) in eine Aufnahmeposition verfahrbar ist, in welchem die zumindest eine Halteeinrichtung (19) das Werkstück (9) ergreift, anschließend in eine Entladeposition verfährt und das Werkstück (9) freigibt, und an dem Tragrahmen (18) mehrere Halteeinrichtungen (19) vorgesehen sind, wobei jede Halteeinrichtung (19) zumindest einen Greifer (27) umfasst, der an einem Ende eines Greifarmes (29) ein Formschlussstück (31) aufweist, welches einen oberen und unteren Greifabschnitt (32, 33) aufweist, die zueinander beabstandet und aufeinander zuweisend ausgerichtet sind und beide am selben Ende des Greifarmes (29) durch einen Anschlagabschnitt (34) begrenzt sind und die Greifabschnitte (32, 33) sowie der dazwischen liegende Anschlagabschnitt (34) einen U-förmigen Greifraum (36) zum formschlüssigen Angreifen an einem Randabschnitt (44) einer Innen- oder Außenkontur (42, 47) des Werkstücks (9) bilden, und jeder Greifer (27) mit dem Greifarm (29) in einem Gehäuse (25) aufgenommen ist, in welchem ein Antrieb (28) vorgesehen ist, in dem der Greifer (27) mittels einer Verfahrbewegung ansteuerbar ist **dadurch gekennzeichnet, dass** die Halteeinrichtung (19) zum Überführen des Greifers (27) in die Ausgangsposition (41) durch Anlegen eines Vakuums gegen eine Rückstellkraft im Antrieb (28) verfahren und gehalten sowie nach dem Eintauchen des Formschlussstücks in die Ebene des Werkstücks (9) deaktivierbar ist, so dass der Greifer (27) mit dem Formschlussstück (31) in die Greifposition (43) zum Werkstück (9) verfahren und selbständig in der Greifposition (43) gehalten ist.

5. Handlingsvorrichtung nach Anspruch 4, **dadurch gekennzeichnet, dass** die Halteeinrichtung (19) mit einem Befestigungsabschnitt (26), der an dem Gehäuse (25) vorgesehen ist, fest an dem Tragrahmen (18) angeordnet ist, oder dass die Halteeinrichtung (19) mit dem Befestigungsabschnitt (26) an einem Rahmensegment (71, 72) des Tragrahmens (18) befestigt ist, wobei das zumindest eine Rahmensegment (71, 72) durch einen Antrieb am Tragrahmen (18) in zumindest eine Raumrichtung verfahrbar ist.

6. Handlingsvorrichtung nach Anspruch 4, **dadurch gekennzeichnet, dass** der Greifer (27) durch den Antrieb (28) verdrehbar und/oder zum Gehäuse (25) vorgesehen ist und vorzugsweise eine Drehachse (45) des Greifers (27) zumindest abschnittsweise in der Längsachse des Greifarms (29) des Greifers (27) liegt und insbesondere das Formschlussstück (31) exzentrisch zur Drehachse (45) des Greifarms (29) ausgerichtet ist.

7. Handlingsvorrichtung nach Anspruch 5 oder 6, **dadurch gekennzeichnet, dass** das Formschlussstück (31) des Greifers (27) zwei- oder mehrteilig ausgebildet und zumindest ein Greifabschnitt (32, 33) im Abstand zum gegenüber liegenden Greifabschnitt (33, 32) verfahrbar ist.

8. Handlingsvorrichtung nach einem der Ansprüche 4 oder 5, **dadurch gekennzeichnet, dass** die Halteeinrichtung (19) zwei Greifer (27) umfasst, wobei jeder Greifarm (29) ein Formschlussstück (31) aufweist, die gegenläufig zueinander ausgerichtet und die Greifer (27) gegenläufig zueinander verfahrbar sind.

9. Handlingsvorrichtung nach einem der Ansprüche 4 bis 8, **dadurch gekennzeichnet, dass** im Gehäuse (25) ein Antrieb (28) vorgesehen ist, der zum Überführen des Greifers (27) aus einer Greifposition (43) in eine Ausgangsposition (41) mit einem Vakuum beaufschlagbar ist.

10. Handlingsvorrichtung nach einem der Ansprüche 4 bis 9, **dadurch gekennzeichnet, dass** an dem Greifarm (29) des Greifers (27) zwischen dem Gehäuse (25) und dem Formschlussstück (31) ein Anschlag (65) vorgesehen ist, der eine Eintauchtiefe des Greifers (27) in eine Ebene des zu handhabenden Werkstücks (9) begrenzt.

11. Handlingsvorrichtung nach einem der Ansprüche 4 bis 10, **dadurch gekennzeichnet, dass** das Formschlussstück (31) zumindest einen Greifabschnitt (32, 33) mit einer Einlaufschräge aufweist.

12. Handlingsvorrichtung nach einem der Ansprüche 4 bis 11, **dadurch gekennzeichnet, dass** zwischen dem Greifarm (29) und dem Formschlussstück (31) eine Schnellwechselschnittstelle vorgesehen ist.

13. Fertigungsverfahren zur Herstellung von zumindest einem Werkstück (9) aus einem plattenförmigen Material durch zumindest eine trennende Bearbeitung, insbesondere eine Schneidbearbeitung oder eine Stanzbearbeitung, in einer Bearbeitungsmaschine (2), bei der das Werkstück (9) auf einer Werkstückauflage (12) aufliegt, wobei zusätzlich zum zumindest einen Werkstück (9) ein Restwerkstück (81) erzeugt werden kann, **dadurch gekennzeichnet, dass** das Werkstück (9) nach einem Handlingsverfahren nach einem der Ansprüche 1 bis 3 von der Werkstückauflage (12) entladen wird.

14. Fertigungsverfahren nach Anspruch 13, **dadurch gekennzeichnet, dass** in ein Restwerkstück (81), welches an eine Außenkontur (42) des Werkstücks (9) angrenzt, eine Eintauchöffnung (82) beziehungsweise eine Greiföffnung eingebracht wird, in welche die Halteeinrichtung (19) zur Durchführung des Handlingsverfahrens eingetaucht wird.

15. Fertigungsverfahren nach Anspruch 13, **dadurch gekennzeichnet, dass** an einer Außenkontur (42) und/oder einer Innenkontur (47) des Werkstücks (9) ein über zumindest einen Steg (85) verbundener Hilfsrahmen (84) ausgeschnitten wird, an welchem die Halteeinrichtung (19) zur Entnahme des Werkstücks (9) in eine Greifposition (43) übergeführt wird.

## Claims

1. Handling method for handling a workpiece (9) produced from a plate-shaped material at least by a separating machining, in particular cutting or punching machining, in which the workpiece (9) is gripped and removed with a handling device (3) which accommodates a plurality of holding devices (19) on a support frame (18), each holding device (19) comprising at least one gripper (27) which has a form-locking piece (31) at one end of a gripper arm (29), which has an upper and lower gripping section (32, 33) which are spaced apart and aligned towards one another and are both delimited at the same end of the gripping arm (29) by a stop section (34) and the gripping sections (32, 33) and the stop section (34) located therebetween form a U-shaped gripping space (36) for positive gripping on an edge section (44) of an inner or outer contour (42, 47) of the workpiece (9), and each gripper (27) is received with the gripper arm (29) in a housing (25), in which a drive (28) is provided, in which the gripper (27) can be actuated by means of a traversing movement and the plurality of holding devices (19) with the support frame (18) are transferred into a plane of the edge section (44) of the workpiece (9) to be gripped and the form-fitting piece (31) of the holding device (19) is moved from an initial position (41) into a gripping position (43), in which the edge portion (44) of the workpiece (9) to be gripped is embraced by the U-shaped gripping space (36) of the positive-locking piece (31), **characterized in that** the holding device (19) for transferring the gripper (27) into the starting position (41) is moved and held by applying a vacuum against a restoring force in the drive (28) and is deactivated after the form-fitting piece has plunged into the plane of the workpiece (9), so that the gripper (27) with the form-fitting piece (31) is moved into the gripping position (43) with respect to the workpiece (9) and is held independently in the gripping position (43).

2. Handling method according to claim 1, **characterized in that** at least one holding device (19) is positioned outside an outer contour (42) of the workpiece (9) in the plane of the workpiece (9) and the form-fitting piece (31) of the gripper (27) is then moved into the gripping position (43).

3. Handling method according to claim 1, **characterized in that** at least one holding device (19) is positioned in an inner contour (47) of the workpiece (9) in the plane of the workpiece (9) and, following this, the form-fitting piece (31) of the gripper (27) is moved into the gripping position (43) and preferably the at least one holding device (19) used for positioning in an inner contour (47) of the workpiece (9), comprises two grippers (27) which, after the positioning of the grippers (27) in the plane of the workpiece (9), are actuated by a counter-rotating traversing movement, so that the form-fitting pieces (31) of the grippers (27) are moved apart and the edge section (44) of the inner contour (47) is gripped around in each case to the U-shaped gripping space (36) of the form-fitting piece (31) in front of each gripper (27).

4. Handling device for carrying out the handling method according to one of claims 1 to 3, in particular for feeding and/or removing workpieces (9) into and out of a processing machine (2), which has a cutting unit (6), which produces at least one workpiece (9) from a plate-shaped material by cutting processing, comprises a movable support frame (18) on which a plurality of holding devices (19) for handling the workpiece (9) are provided, wherein the support frame (18) is movable into a pick-up position, in which the at least one holding device (19) grips the workpiece (9), then moves into an unloading position and releases the workpiece (9), and a plurality of holding devices (19) are provided on the support frame (18), wherein each holding device (19) comprises at least one gripper (27), which has a form-fitting piece (31) at one end of a gripper arm (29), which has an upper and lower gripping section (32, 33), which are spaced apart and aligned towards each other and are both delimited at the same end of the gripper arm (29) by a stop section (34) and the gripper sections (32, 33) and the stop section (34) located therebetween form a U-shaped gripping space (36) for positive gripping on an edge section (44) of an inner or outer contour (42, 47) of the workpiece (9), and each gripper (27) with the gripper arm (29) is accommodated in a housing (25) in which a drive (28) is provided, in which the gripper (27) can be actuated by means of a traversing movement, **characterized in that** the holding device (19) for transferring the gripper (27) into the starting position (41) can be moved and held in the drive (28) by applying a vacuum against a restoring force and can be deactivated after the form-fitting piece has plunged into the plane of the workpiece (9), so that the gripper (27) with the form-fitting piece (31) is moved into the gripping position (43) with respect to the workpiece (9) and is held independently in the gripping position (43).

5. Handling device according to claim 4, **characterized in that** the holding device (19) is fixedly arranged on the supporting frame (18) by means of a fastening section (26) provided on the housing (25), or **in that** the holding device (19) is fastened by means of the fastening section (26) to a frame segment (71, 72) of the supporting frame (18), the at least one frame segment (71, 72) being movable in at least one spatial direction by means of a drive on the supporting frame (18).

6. Handling device according to claim 4, **characterized in that** the gripper (27) can be rotated by the drive (28) and/or is provided relative to the housing (25) and preferably an axis of rotation (45) of the gripper (27) lies at least in sections in the longitudinal axis of the gripper arm (29) of the gripper (27) and in particular the positive locking piece (31) is aligned eccentrically to the axis of rotation (45) of the gripper arm (29).

7. Handling device according to claim 5 or 6, **characterized in that** the form-fitting piece (31) of the gripper (27) is designed in two or more parts and at least one gripping section (32, 33) can be moved at a distance from the opposite gripping section (33, 32).

8. Handling device according to one of claims 4 or 5, **characterized in that** the holding device (19) comprises two grippers (27), each gripper arm (29) having a form-fitting piece (31), which are aligned in opposite directions to one another and the grippers (27) can be moved in opposite directions to one another.

9. Handling device according to one of claims 4 to 8, **characterized in that** a drive (28) is provided in the housing (25), to which a vacuum can be applied for transferring the gripper (27) from a gripping position (43) to an initial position (41).

10. Handling device according to one of claims 4 to 9, **characterized in that** a stop (65) is provided on the gripper arm (29) of the gripper (27) between the housing (25) and the form-fitting piece (31), which stop limits an immersion depth of the gripper (27) into a plane of the workpiece (9) to be handled.

11. Handling device according to one of claims 4 to 10, **characterized in that** the form-fitting piece (31) has at least one gripping section (32, 33) with an inlet slope.

12. Handling device according to one of claims 4 to 11, **characterized in that** a quick-change interface is provided between the gripper arm (29) and the form-fitting piece (31).

13. Manufacturing method for producing at least one workpiece (9) from a plate-shaped material by at least one separating machining operation, in particular a cutting machining operation or a punching machining operation, in a processing machine (2), in which the workpiece (9) rests on a workpiece support (12), it being possible to produce a residual workpiece (81) in addition to the at least one workpiece (9), **characterized in that** the workpiece (9) is unloaded from the workpiece support (12) in accordance with a handling method according to one of claims 1 to 3.

14. Manufacturing method according to claim 13, **characterized in that** an immersion opening (82) or a gripping opening is made in a residual workpiece (81) which adjoins an outer contour (42) of the workpiece (9) and into which the holding device (19) is immersed in order to carry out the handling process.

15. Manufacturing method according to claim 13, **characterized in that** an auxiliary frame (84) connected via at least one web (85) is cut out on an outer contour (42) and/or an inner contour (47) of the workpiece (9), on which the holding device (19) is transferred into a gripping position (43) for removing the workpiece (9).

## Revendications

1. Procédé de manipulation pour la manipulation d'une pièce (9) fabriquée à partir d'un matériau en forme de plaque au moins par un usinage de séparation, en particulier un usinage de coupe ou d'estampage, dans lequel la pièce (9) est saisie et évacuée avec un dispositif de manipulation (3) qui reçoit plusieurs dispositifs de maintien (19) sur un cadre porteur (18), chaque dispositif de maintien (19) comprenant au moins un préhenseur (27) qui présente à une extrémité d'un bras de préhension (29) une pièce de liaison par la forme (31), qui présente une section de préhension supérieure et une section de préhension inférieure (32, 33) qui sont espacées l'une de l'autre et orientées l'une vers l'autre et qui sont toutes deux limitées à la même extrémité du bras de préhension (29) par une section de butée (34) et les sections de préhension (32, 33) ainsi que la section de butée (34) située entre elles forment un espace de préhension (36) en forme de U pour la préhension par complémentarité de forme sur une section de bord (44) d'un contour intérieur ou extérieur (42, 47) de la pièce à usiner (9), et chaque pince (27) est logée avec le bras de préhension (29) dans un boîtier (25), dans lequel est prévu un entraînement (28) dans lequel le préhenseur (27) peut être commandé au moyen d'un mouvement de déplacement et les plusieurs dispositifs de retenue (19) sont transférés avec le cadre porteur (18) dans un plan de la section de bord (44) à saisir de la pièce (9) et la pièce à engagement positif (31) du dispositif de retenue (19) est déplacée d'une position initiale (41) dans une position de saisie (43), dans laquelle la partie de bord (44) à saisir de la pièce (9) est entourée par l'espace de préhension (36) en forme de U de la pièce de fermeture de moule (31), **caractérisé en ce que** le dispositif de maintien (19) est déplacé et maintenu dans l'entraînement (28) pour transférer la pince (27) dans la position initiale (41) par application d'un vide contre une force de rappel et est désactivé après l'immersion de la pièce de fermeture de forme dans le plan de la pièce (9), de sorte que la pince (27) avec la pièce de fermeture de forme (31) est déplacée dans la position de préhension (43) vers la pièce (9) et est maintenue de manière autonome dans la position de préhension (43) .

2. Procédé de manipulation selon la revendication 1, **caractérisé en ce qu'**au moins un dispositif de maintien (19) est positionné à l'extérieur d'un contour extérieur (42) de la pièce (9) dans le plan de la pièce (9) et, à la suite de cela, la pièce à engagement positif (31) du préhenseur (27) est déplacée dans la position de préhension (43).

3. Procédé de manipulation selon la revendication 1, **caractérisé en ce qu'**au moins un dispositif de maintien (19) est positionné dans un contour intérieur (47) de la pièce à usiner (9) dans le plan de la pièce à usiner (9) et, à la suite de cela, la pièce à engagement positif (31) du préhenseur (27) est déplacée dans la position de préhension (43) et, de préférence, ledit au moins un dispositif de maintien (19), qui est utilisé pour le positionnement dans un contour intérieur (47) de la pièce à usiner (9), comprend deux pinces (27) qui, après le positionnement des pinces (27) dans le plan de la pièce (9), sont commandées par un mouvement de déplacement en sens inverse, de sorte que les pièces de fermeture de forme (31) des pinces (27) s'écartent l'une de l'autre et que la partie de bord (44) du contour intérieur (47) est respectivement entourée vers l'espace de préhension en forme de U (36) de la pièce de fermeture de forme (31) devant chaque pince (27).

4. Dispositif de manipulation pour la mise en œuvre du procédé de manipulation selon l'une des revendications 1 à 3, en particulier pour l'amenée et/ou l'évacuation de pièces (9) dans et hors d'une machine d'usinage (2) qui présente une unité de coupe (6) qui produit par usinage par coupe au moins une pièce (9) à partir d'un matériau en forme de plaque, comprend un cadre porteur mobile (18) sur lequel sont prévus plusieurs dispositifs de retenue (19) pour la manipulation de la pièce (9), le cadre porteur (18) pouvant être déplacé dans une position de réception dans laquelle le au moins un dispositif de maintien (19) saisit la pièce (9), se déplace ensuite dans une position de déchargement et libère la pièce (9), et plusieurs dispositifs de maintien (19) étant prévus sur le cadre porteur (18), chaque dispositif de maintien (19) comprenant au moins un préhenseur (27) qui présente à une extrémité d'un bras de préhension (29) une pièce à engagement positif (31) qui présente une section de préhension supérieure et inférieure (32, 33), qui sont espacées et orientées l'une vers l'autre et qui sont toutes deux limitées à la même extrémité du bras de préhension (29) par une section de butée (34) et les sections de préhension (32, 33) ainsi que la section de butée (34) située entre elles forment un espace de préhension (36) en forme de U pour la saisie par complémentarité de forme sur une section de bord (44) d'un contour intérieur ou extérieur (42, 47) de la pièce (9), et chaque pince (27) est logée avec le bras de préhension (29) dans un boîtier (25) dans lequel est prévu un entraînement (28), dans lequel le préhenseur (27) peut être commandé au moyen d'un mouvement de déplacement, **caractérisé en ce que** le dispositif de maintien (19) est déplacé et maintenu dans l'entraînement (28) pour le transfert du préhenseur (27) dans la position de départ (41) par application d'un vide contre une force de rappel et peut être désactivé après l'immersion de la pièce de fermeture de moule dans le plan de la pièce (9), de sorte que le préhenseur (27) avec la pièce de fermeture de forme (31) est déplacé dans la position de préhension (43) par rapport à la pièce (9) et est maintenu de manière autonome dans la position de préhension (43).

5. Dispositif de manipulation selon la revendication 4, **caractérisé en ce que** le dispositif de retenue (19) est disposé de manière fixe sur le cadre porteur (18) avec une section de fixation (26) qui est prévue sur le bo tier (25), ou **en ce que** le dispositif de retenue (19) est fixé avec la section de fixation (26) sur un segment de cadre (71, 72) du cadre porteur (18), le au moins un segment de cadre (71, 72) pouvant être déplacé par un entra nement sur le cadre porteur (18) dans au moins une direction spatiale.

6. Dispositif de manipulation selon la revendication 4, **caractérisé en ce que** le préhenseur (27) peut être tourné par l'entra nement (28) et/ou est prévu par rapport au bo tier (25) et de préférence un axe de rotation (45) du préhenseur (27) se trouve au moins par sections dans l'axe longitudinal du bras de préhension (29) du préhenseur (27) et en particulier la pièce de liaison par la forme (31) est orientée de manière excentrée par rapport à l'axe de rotation (45) du bras de préhension (29).

7. Dispositif de manipulation selon la revendication 5 ou 6, **caractérisé en ce que** la pièce de liaison par la forme (31) de la pince (27) est réalisée en deux ou plusieurs parties et au moins une section de préhension (32, 33) est déplaçable à distance de la section de préhension (33, 32) opposée.

8. Dispositif de manipulation selon l'une des revendications 4 ou 5, **caractérisé en ce que** le dispositif de maintien (19) comprend deux pinces (27), chaque bras de préhension (29) présentant une pièce de liaison par la forme (31) qui sont orientées en sens inverse l'une de l'autre et les pinces (27) pouvant être déplacées en sens inverse l'une de l'autre.

9. Dispositif de manipulation selon l'une des revendications 4 à 8, **caractérisé en ce qu'**il est prévu dans le boîtier (25) un entraînement (28) qui peut être alimenté en vide pour faire passer le préhenseur (27) d'une position de préhension (43) à une position de départ (41).

10. Dispositif de manipulation selon l'une des revendications 4 à 9, **caractérisé en ce qu'**une butée (65) est prévue sur le bras de préhension (29) de la pince (27), entre le boîtier (25) et la pièce de liaison de forme (31), qui limite une profondeur d'immersion de la pince (27) dans un plan de la pièce à manipuler (9).

11. Dispositif de manipulation selon l'une quelconque des revendications 4 à 10, **caractérisé en ce que** la pièce de liaison de forme (31) comporte au moins une partie de préhension (32, 33) présentant un chanfrein d'entrée.

12. Dispositif de manipulation selon l'une des revendications 4 à 11, **caractérisé en ce qu'**une interface de changement rapide est prévue entre le bras de préhension (29) et la pièce de liaison de forme (31).

13. Procédé de fabrication pour la fabrication d'au moins une pièce (9) à partir d'un matériau en forme de plaque par au moins un usinage de séparation, en particulier un usinage de coupe ou un usinage de poinçonnage, dans une machine d'usinage (2), dans laquelle la pièce (9) repose sur un support de pièce (12), une pièce résiduelle (81) pouvant être produite en plus de la au moins une pièce (9), **caractérisé en ce que** la pièce (9) est déchargée du support de pièce (12) après un procédé de manipulation selon l'une des revendications 1 à 3.

14. Procédé de fabrication selon la revendication 13, **caractérisé en ce que** dans une pièce résiduelle (81), qui est adjacente à un contour extérieur (42) de la pièce (9), est pratiquée une ouverture d'immersion (82) ou une ouverture de préhension, dans laquelle le dispositif de retenue (19) est immergé pour la mise en oeuvre du procédé de manipulation.

15. Procédé de fabrication selon la revendication 13, **caractérisé en ce qu'**un cadre auxiliaire (84) relié par au moins une entretoise (85) est découpé sur un contour extérieur (42) et/ou un contour intérieur (47) de la pièce (9), sur lequel le dispositif de maintien (19) est transféré dans une position de préhension (43) pour le prélèvement de la pièce (9).
